# EUROPÄISCHE PATENTSCHRIFT

(11) **EP 1 892 070 B1**
(45) Veröffentlichungstag und Bekanntmachung des Hinweises auf die Patenterteilung: **31.08.2011**
(21) Anmeldenummer: 07113306.0
(22) Anmeldetag: 27.07.2007
(51) Int. Cl.: B28D 1/14, B23B 51/02

(54) **Bohrwerkzeug mit Hartstoffeinsatz**
Drill tool with hard material insert
Outil de forage avec insert en matériau dur

(30) Priorität: 21.08.2006 DE 102006000410
(43) Veröffentlichungstag der Anmeldung: 27.02.2008
(73) Patentinhaber: HILTI Aktiengesellschaft, 9494 Schaan (LI)
(72) Erfinder: Koch, Olaf, 86916 Kaufering (DE)
(74) Vertreter: Wildi, Roland

(56) Entgegenhaltungen:
- EP-A- 0 790 387
- EP-A- 0 846 835
- WO-A-2005/063427

## Beschreibung

Die Erfindung bezeichnet ein Bohrwerkzeug mit einem Hartstoffeinsatz, insbesondere zum Bohren in armiertem Beton.

Die Problematik derartiger Bohrwerkzeuge besteht darin, dass diese zum abrasiven Abtrag von sprödem Gestein einerseits hinreichend hart, zur Robustheit gegenüber Armierungseisentreffen andererseits aber duktil ausgebildet werden müssen. Neben der entsprechenden Materialauswahl kommt in dieser Hinsicht der Form des Hartstoffeinsatzes eine wichtige Bedeutung zu, wobei zumindest ein Aspekt in der Optimierung des Fertigungsprozesses liegt, bei dem die stoffschlüssige Verbindung des Hartstoffeinsatzes mit dem Bohrkopf eines Bohrwerkzeugs unter eng begrenzten, optimierten Bedingungen erfolgen muss, bspw. um temperaturbedingte Eigenspannungen und Unsymmetrien zu minimieren.

Nach den US5287937 oder EP790387 die alle Merkmale des Oberbegriffs des Anspruchs 1 offenbaren, ist ein spiegelsymmetrischer plattenförmiger Hartstoffeinsatz mit zwei gegenüberliegenden Radialschenkeln, an denen die Schneidkante ausgebildet ist, und mit einer zylindersegmentförmigen Mittenverstärkung bekannt, welche beim Einlöten in den Bohrkopf eine Selbstjustage bewirkt.

Nach der US3447616 ist ein plattenförmiger Hartstoffeinsatz mit einer zylindersegmentförmigen Mittenverstärkung bekannt, die sich nicht über die volle axiale Länge erstreckt.

Nach den DE19650487 und DE19724373 sind kompakt prismatische, im Querschnitt X-förmige Hartstoffeinsätze bekannt.

Nach der USD515116S weist ein Bohrwerkzeug einen Hartstoffeinsatz auf, welcher im quer zur Drehachse des Bohrwerkzeuges verstandenen Querschnitt eine axiale Mittenverstärkung und zwei diametral gegenüberliegende Radialschenkel mit wechselseitig je einer Freiseite und einer dieser gegenüberliegenden Verbindungsseite aufweist.

Die Aufgabe der Erfindung besteht in der Realisierung eines Bohrwerkzeugs mit einem Hartstoffeinsatz, der verfahrenstechnisch günstig als Massenprodukt herstellbar sowie zum Bohren in armiertem Beton optimiert ist.

Die Aufgabe wird im Wesentlichen durch die Merkmale des Anspruchs 1 gelöst. Vorteilhafte Weiterbildungen ergeben sich aus den Unteransprüchen.

So weist ein Bohrwerkzeug einen Hartstoffeinsatz auf, welcher im quer zur Drehachse des Bohrwerkzeuges verstandenen Querschnitt eine axiale Mittenverstärkung und zwei diametral gegenüberliegende Radialschenkel mit wechselseitig je einer Freiseite und einer dieser gegenüberliegenden Verbindungsseite aufweist, wobei im Querschnitt sich die Radialschenkel nach radial aussen verjüngen und an der Verbindungsseite eine konkave Aussparung aufweisen.

Durch die konkave Aussparung an der bei zweckentsprechender Benutzung zur Drehrichtung abgewandten Verbindungsseite der Radialschenkel weist der formschlüssig passend ausgebildete, zugeordnete Bohrkopf bzw. Schaft in Drehrichtung eine tangentiale Verstärkung auf, wobei beim Verbinden mit dem Schaft bzw. Bohrkopf die koaxiale Selbstzentrierung des Hartstoffeinsatzes durch die Mittenverstärkung gleichwohl gegeben ist.

Vorteilhaft ist der Hartstoffeinsatz zweizählig rotationssymmetrisch ausgebildet, wodurch dieser für eine zweigängige oder viergängige symmetrische Bohrwendel angepasst ist.

Vorteilhaft verläuft im axialen Querschnitt die Verbindungsseite des Radialschenkels gerade, wodurch dieser Abschnitt der zugeordneten Ausnehmung des Bohrkopfes verfahrenstechnisch günstig durch eine Schlitzfräsung herstellbar ist, bspw. ausgeführt mit einem Scheibenfräser.

Vorteilhaft verläuft im axialen Querschnitt die Freiseite des Radialschenkels gerade und geht tangential in die Mittenverstärkung über, wodurch aus Symmetriegründen bei einer zweckentsprechenden Benutzung keine lokalen Beanspruchungsmaxima entstehen können.

Vorteilhaft ist die Mittenverstärkung im axialen Querschnitt zumindest stückweise kreisbogenförmig ausgebildet, wodurch dieser Abschnitt der zugeordneten Ausnehmung des Bohrkopfes verfahrenstechnisch günstig durch eine axiale Bohrung herstellbar ist, bspw. ausgeführt mit einem Fingerfräser.

Vorteilhaft ist der Übergang der Mittenverstärkung zur Verbindungsseite des Radialschenkels (mathematisch) glatt ausgebildet, d.h. ohne Knick, wodurch keine Kerbspannungen an diesem entstehen, welche die Dauerfestigkeit des hochbeanspruchten Hartstoffeinsatzes herabsetzen würden.

Vorteilhaft weist der Übergang einen Krümmungsradius grösser als ein Zwanzigstel der diametralen Länge des Hartstoffeinsatzes auf, wodurch die dort bei einer zweckentsprechenden Benutzung entstehende Beanspruchungen innerhalb der Festigkeitsgrenzwerte verbleiben.

Vorteilhaft bildet der Hartstoffeinsatz axial stirnseitig eine über beide Radialschenkel verlaufende Hauptschneide aus, wobei weiter vorteilhaft axial stirnseitig innerhalb der Mittenverstärkung quer zur Hauptschneide eine Nebenschneide verläuft, wodurch die Bauteilfestigkeit bei einem Armierungseisentreffer erhöht wird.

Vorteilhaft ist der in einer Ausnehmung eines Bohrkopfes angeordnete Hartstoffeinsatz stoffschlüssig mit diesem verbunden. Dabei erfolgt dies weiter vorteilhaft über eine Hartlötung, wodurch ein zum Bohren in armiertem Beton optimiertes Bohrwerkzeug realisiert ist.

Vorteilhaft liegt der Hartstoffeinsatz an der Freiseite der Radialschenkel im Schaft bzw. Bohrkopf des Bohrwerkzeugs frei, wodurch die passend ausgeformte Ausnehmung keinen radialen Hinterschnitt aufweist und somit verfahrenstechnisch günstig durch eine Schlitzfräsung herstellbar ist, bspw. ausgeführt mit einem Scheibenfräser.

Die Erfindung wird bezüglich eines vorteilhaften Ausführungsbeispiels näher erläutert mit:
- Fig. 1: als Querschnitt durch einen Hartstoffeinsatz
- Fig. 2: als Seitenansicht eines Bohrwerkzeugs
- Fig. 3: als Aufsicht eines Bohrwerkzeugs
- Fig. 4: als Seitenansicht einer Variante eines Bohrwerkzeugs
- Fig. 5: als Aufsicht einer Variante eines Bohrwerkzeugs

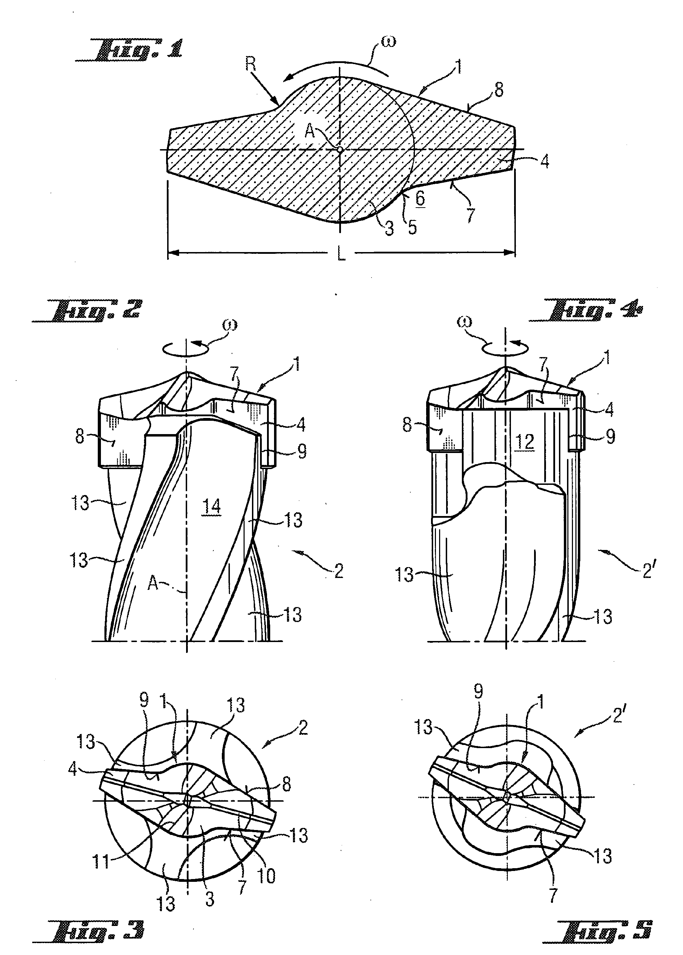

Nach Fig. 1 weist ein zweizählig rotationssymmetrisch ausgebildeter Hartstoffeinsatz 1 eines axial drehschlagend um eine Drehrichtung [omega] um eine Achse A angetriebenen, Bohrwerkzeugs 2 (Fig. 2) eine axiale Mittenverstärkung 3 und zwei diametral gegenüberliegende, sich nach radial aussen verjüngende Radialschenkel 4 auf. Die Radialschenkel 4 weisen ausschliesslich an einer zur Drehrichtung [omega] abgewandten Verbindungsseite 7 eine konkave Aussparung 6 auf, welche gerade verläuft. Die der Drehrichtung [omega] zugewandte Freiseite 8 des Radialschenkels 4 verläuft ebenfalls gerade und geht tangential in die Mittenverstärkung 3 über, welche stückweise kreisbogenförmig ausgebildet ist. Der Übergang 5 der Mittenverstärkung 3 zur Verbindungsseite 7 des Radialschenkels 4 ist glatt ausgebildet mit einem Krümmungsradius R von einem Zehntel der diametralen Länge L des Hartstoffeinsatzes 1.

Nach Fig. 2 und Fig. 3 ist bei einem Bohrwerkzeug 2 der Hartstoffeinsatz 1 in einer Ausnehmung 9 des axial abgelängten Schaftes 14 mit vier Wendelgängen 13 angeordnet und stoffschlüssig mit diesem an der Verbindungsseite 7 hart verlötet, wobei der Hartstoffeinsatz 1 an der zur Drehrichtung [omega] zugewandten Freiseite 8 der Radialschenkel 4 freiliegt. Der Hartstoffeinsatz 1 bildet axial stirnseitig eine über die Radialschenkel 4 verlaufende Hauptschneide 10 sowie innerhalb der Mittenverstärkung 3 eine quer zur Hauptschneide 10 verlaufende Nebenschneide 11 aus.

Nach Fig. 4 und Fig. 5 ist der Hartstoffeinsatz 1 in einer Ausnehmung 9 eines aufgestauchten Bohrkopfes 12 eines Bohrwerkzeugs 2' mit zwei Wendelgängen 13 angeordnet und stoffschlüssig mit diesem an der Verbindungsseite 7 hart verlötet, wobei der Hartstoffeinsatz 1 an der der Drehrichtung [omega] zugewandten Freiseite 8 der Radialschenkel 4 freiliegt.

## Patentansprüche

1. Bohrwerkzeug mit einem Hartstoffeinsatz (1), welcher im quer zur Drehachse (A) des Bohrwerkzeuges (2, 2') verstandenen Querschnitt eine axiale Mittenverstärkung (3) und zwei diametral gegenüberliegende Radialschenkel (4) mit wechselseitig je einer Freiseite (8) und einer dieser gegenüberliegenden Verbindungsseite (7) aufweist, dadurch gekenzeichnet daβ im Querschnitt sich die Radialschenkel (4) nach radial aussen verjüngen und an der Verbindungsseite (7) eine konkave Aussparung aufweisen.

2. Bohrwerkzeug nach Anspruch 1, **dadurch gekennzeichnet, dass** der Hartstoffeinsatz (1) zweizählig rotationssymmetrisch ausgebildet ist.

3. Bohrwerkzeug nach Anspruch 1 oder 2, **dadurch gekennzeichnet, dass** im axialen Querschnitt die Verbindungsseite (7) des Radialschenkels (4) gerade verläuft.

4. Bohrwerkzeug nach einem der Ansprüche 1 bis 3, **dadurch gekennzeichnet, dass** im axialen Querschnitt die Freiseite (8) des Radialschenkels (4) gerade verläuft und tangential in die Mittenverstärkung (3) übergeht.

5. Bohrwerkzeug nach einem der Ansprüche 1 bis 4, **dadurch gekennzeichnet, dass** im axialen Querschnitt die Mittenverstärkung (3) zumindest stückweise kreisbogenförmig ausgebildet ist.

6. Bohrwerkzeug nach einem der Ansprüche 1 bis 5, **dadurch gekennzeichnet, dass** zwischen der Mittenverstärkung (3) und der Verbindungsseite (7) des Radialschenkels (4) ein glatter Übergang (5) ausgebildet ist.

7. Bohrwerkzeug nach Anspruch 6, **dadurch gekennzeichnet, dass** der Übergang (5) einen Krümmungsradius (R) grösser als ein Zwanzigstel der diametralen Länge (L) des Hartstoffeinsatzes (1) aufweist.

8. Bohrwerkzeug nach einem der Ansprüche 1 bis 7, **dadurch gekennzeichnet, dass** der Hartstoffeinsatz (1) axial stirnseitig eine über beide Radialschenkel (4) verlaufende Hauptschneide (10) sowie innerhalb der Mittenverstärkung (3) eine quer zur Hauptschneide (10) verlaufende Nebenschneide (11) ausbildet.

9. Bohrwerkzeug nach einem der Ansprüche 1 bis 8, **dadurch gekennzeichnet, dass** der Hartstoffeinsatz (1) stoffschlüssig mit einer Ausnehmung (9) verbunden ist.

10. Bohrwerkzeug nach Anspruch 9, **dadurch gekennzeichnet, dass** der Hartstoffeinsatz (1) an der Freiseite (8) der Radialschenkel (4) freiliegt.

## Claims

1. Drilling bit with a carbide insert (1) which in cross-section at right angles to the rotational axis (A) of the drilling bit (2, 2') has an axial central thickening (3) and two diametrically opposite radial arms (4) each presenting, alternately, a free side (8) and a connecting side (7) opposite thereto, **characterized in that** in cross-section the radial arms (4) taper radially outwards and have a concave recess on the connecting side (7).

2. Drilling bit according to Claim 1, **characterized in that** the carbide insert (1) is formed with two-fold rotational symmetry.

3. Drilling bit according to Claim 1 or Claim 2, **characterized in that** in the axial cross-section the connecting side (7) of the radial arm (4) extends in a straight line.

4. Drilling bit according to any one of Claims 1 to 3, **characterized in that** in the axial cross-section the free side (8) of the radial arm (4) extends in a straight line and merges tangentially with the central thickening (3).

5. Drilling bit according to any one of Claims 1 to 4, **characterized in that** in the axial cross-section the central thickening (3) is at least partly formed as a circular arc.

6. Drilling bit according to any one of Claims 1 to 5, **characterized in that** a smooth transition (5) is formed between the central thickening (3) and the connecting side (7) of the radial arm (4).

7. Drilling bit according to Claim 6, **characterized in that** the transition (5) has a radius of curvature (R) greater than one twentieth of the diametrical length (L) of the carbide insert (1).

8. Drilling bit according to any one of Claims 1 to 7, **characterized in that** the axial front face of the carbide insert (1) is formed with a primary cutting edge (10) extending over both radial arms (4) and, within the central thickening (3), a secondary cutting edge (11) extending at right angles to the primary cutting edge (10).

9. Drilling bit according to any one of Claims 1 to 8, **characterized in that** the carbide insert (1) is connected by adhesive force to a recess (9).

10. Drilling bit according to Claim 9, **characterized in that** the carbide insert (1) is exposed on the free side (8) of the radial arms (4).

## Revendications

1. Outil de forage muni d'un insert en matériau dur (1) comportant, dans la section transversale s'étendant transversalement à l'axe de rotation (A) de l'outil de forage (2, 2'), un renfort central axial (3) et deux bras radiaux diamétralement opposés (4) ayant chacun, de chaque côté, un côté libre (8) et un côté d'assemblage (7) opposé à celui-ci, **caractérisé en ce que** les bras radiaux (4) se rétrécissent radialement vers l'extérieur en coupe transversale et comportent un évidement concave sur le côté d'assemblage (7).

2. Outil de forage selon la revendication 1, **caractérisé en ce que** l'insert en matériau dur (1) est formé comme un double corps à symétrie de rotation.

3. Outil de forage selon la revendication 1 ou 2, **caractérisé en ce qu'**en coupe transversale axiale, le côté d'assemblage (7) du bras radial (4) s'étend de manière rectiligne.

4. Outil de forage selon l'une quelconque des revendications 1 à 3, **caractérisé en ce qu'**en coupe transversale axiale, le côté libre (8) du bras radial (4) s'étend de manière rectiligne et passe tangentiellement dans le renfort central (3).

5. Outil de forage selon l'une quelconque des revendications 1 à 4, **caractérisé en ce qu'**en coupe transversale axiale, le renfort central (3) est configuré au moins partiellement en forme d'arc de cercle.

6. Outil de forage selon l'une quelconque des revendications 1 à 5, **caractérisé en ce qu'**une transition plate (5) est formée entre le renfort central (3) et le côté d'assemblage (7) du bras radial (4).

7. Outil de forage selon la revendication 6, **caractérisé en ce que** la transition (5) présente un rayon de courbure (R) plus grand qu'un vingtième de la longueur diamétrale (L) de l'insert en matériau dur (1).

8. Outil de forage selon l'une quelconque des revendications 1 à 7, **caractérisé en ce que** l'insert en matériau dur (1) forme, sur un côté d'extrémité axial, un tranchant principal (10) s'étendant au-dessus des deux bras radiaux (4) et à l'intérieur du renfort (3), un tranchant auxiliaire (11) s'étendant transversalement au tranchant principal (10).

9. Outil de forage selon l'une quelconque des revendications 1 à 8, **caractérisé en ce que** l'insert en matériau dur (1) est assemblé avec un évidement (9) de manière bloquante par un matériau.

10. Outil de forage selon la revendication 9, **caractérisé en ce que** l'insert en matériau dur (1) est exposé sur le côté libre (8) du bras radial (4).
